Europäisches Patentamt

European Patent Office

Office européen des brevets

(11) Publication number: **0 309 611**

**A1**

# EUROPEAN PATENT APPLICATION

(21) Application number: **87114404.4**

(51) Int. Cl.4: **B62D 25/18**

(22) Date of filing: **02.10.87**

(43) Date of publication of application:
**05.04.89 Bulletin 89/14**

(84) Designated Contracting States:
**AT DE FR GB IT NL SE**

(71) Applicant: **Bell Technology Associates**
**360 Holly Sugar Building**
**Colorado Springs, CO 80903(US)**

(72) Inventor: **Bell, James R.**
**2411 Marlborough Place**
**Colorado Springs CO 80909(US)**
Inventor: **Preyss, Albert E.**
**1540 Tanglewood Drive**
**West Chester, PA 19380(US)**
Inventor: **Forster, Tom J.**
**2906 Nevermind Lane**
**Colorado Springs, CO 80917(US)**

(74) Representative: **Schulze, Ilse, Dipl.-Chem. et**
**al**
**Gaisbergstrasse 3**
**D-6900 Heidelberg(DE)**

(54) **Method and apparatus for controlling spray and splash caused by a vehicle while reducing the drag of the vehicle.**

(57) An apparatus is provided for minimizing outward lateral spraying and/or splashing of water that is contacted by a moving vehicle (12), such as a tractor/trailer. In one embodiment, the apparatus is a flap-like device (50) having a number of holes (56) formed at predetermined locations in the device. The holes are preferably tapered (58). The devices are typically located behind vehicle wheels. In another embodiment, the apparatus is an imperforate body (70-72) that can be connected to the frame of the vehicle (12) at predetermined locations. The embodiments of the invention develop improved streamline flow whereby undesirable vortices of air and/or water are controlled and the lateral, outward movement of water is substantially reduced. Additionally, the streamline flow reduces vehicle drag inasmuch as developed vortices located adjacent to the side of the vehicle, and which cause additional drag, are entrapped closer to the vehicle to thereby prevent their spreading out.

FIG. 1

## METHOD AND APPARATUS FOR CONTROLLING SPRAY AND SPLASH CAUSED BY A VEHICLE WHILE REDUCING THE DRAG OF THE VEHICLE

### Field of the Invention

The present invention relates to method and apparatus for minimizing spraying and splashing that results when a moving vehicle encounters water and, in particular, to an apparatus that creates favorable aerodynamic flow patterns to prevent unwanted spraying and splashing, as well as reducing aerodynamic drag associated with a moving vehicle.

### Background Information

It is established practice for vehicles, particularly most trucks with accompanying trailers, to utilize imperforate "mud" flaps for the claimed purpose of controlling the movement of mud, sand or other debris that is contacted by the wheels of the moving vehicle. Unfortunately, use of such well-known imperforate mud flaps does not effectively control the spraying and splashing of water, which is present on the road surface and in the air as a vapor due to, for example, rain, snow, sleet and hail. In fact, the imperforate mud flap all too frequently aggrevates the spraying and splashing problem. That is, water contacted by the wheels of a large truck is directed against the flap, which is typically positioned just behind the wheel. The forceful striking of the water on the imperforate mud flap causes both spattering and atomization of the water and causes some of the water to be laterally directed away from the truck. A measurable amount of water is also directed laterally outward as a result of the turbulent and chaotic air patterns that exist about the vehicle wheels as water is caught up in and rides on such air patterns. In the case of a multi-lane highway, the water directed laterally outward contacts any nearby vehicle --frequently blinding the driver of the adjacent vehicle. Needless to say, splashing and spraying of water on adjacent vehicles creates a safety hazard that should be eliminated or minimized.

In recent years, the U.S. Department of Transportation has been made increasingly aware of the water spraying and splashing problems and has become involved in finding one or more solutions. Moved into action by a provision to a federal highway bill, the Department of Transportation has published a proposed regulation that identifies standards for splash and spray devices on tractor trailers, or the like, which use interstate highways. Such standards are intended to lead to the development of devices that control the unwanted effects of the spray/splash problems. In one proposed solution, an imperforate mud flap is fitted with grass-like protrusions that are expected to prevent or significantly reduce the lateral movement of water after it has contacted such a flap.

The present invention is directed to solving the spray and/or splash problem in an effective and yet practical manner. In its broader aspects, the invention disclosed herein improves the streamlining of fluid by controlling vortices of air and water. A further valuable effect of the present invention is its ability to noticeably reduce the drag of the moving vehicle, unlike conventional imperforate mud flaps or other known devices.

### Summary of the Invention

To produce the improved streamlining and concomitant pressure recovery that is desirable for eliminating, or at least minimizing the spray/splash problem, two preferred embodiments of the present invention have been identified or developed thus far. In one embodiment, a flap-like device having a number of suitably shaped perforations or holes, preferably being tapered, is provided behind the vehicle wheels. One or more flap-like devices are located on the vehicle in a predetermined manner and the holes are formed therein according to a predetermined pattern in order to best counteract or control vortices of air and liquid that are generated when the vehicle moves through water in the air and/or located on the road surface. The holes are used in converting large cell vortices that impinge on the device to a number of smaller vortices and thereby induce a more streamlined fluid flow. The flap-like device causes most of the liquid or moisture that contacts the flap to be separated from the impinging vortices by centrifugal action so that the liquid or water moves down along the flap surface to its bottom whereby the water is released to the road surface. At the same time, air and/or minute droplets or moisture pass through the holes and continue along towards the back of the vehicle, such as the rear of the trailer of the truck/trailer tandem. Because of these effects, the spraying and/or splashing of water laterally from the flap surface is reduced. In addition, it has been noted that the improved streamlining, due to the flap-like devices, reduces the aerodynamic drag of the truck/trailer. Because of the generally square corner truck configuration, vortices are developed along the sides of the truck and, depending upon their strength, extend laterally outwardly for a distance away from the truck. These vortices cause considerable vehicle drag because such vortices effectively add to the width of the truck/trailer. The flap-like devices located adjacent to the vehicle wheels reduce the chaotic flow behavior that is generated, entrap vortices that are created due to the geometric configuration of the vehicle, and promote pressure recovery behind the devices.

In another desirable embodiment, the invention includes one or a series of imperforate fluid-contacting members that are connected, in one embodiment, to the underside of the vehicle frame and suitably located adjacent to the vehicle wheels. In one form, the member is a cambered device and has an airfoil-like shape, while in a second form the member is not cambered but is connected to the vehicle such that it is inclined or tilted at an angle relative to a line parallel to the longitudinal extent of the vehicle. Regardless of the specific form and location, such members are positioned in the path of turbulent fluid and vortices generated by the vehicle and act to streamline the flow by entraining high energy stream lines of fluid and directing them into lower energy layers or portions of the boundary layer(s) existing adjacent to the vehicle and/or road surface. In such a manner, water spraying and splashing in a lateral direction away from the truck/trailer are desirably controlled.

In view of the foregoing summary, a number of worthwhile objectives are seen to be realized by the present invention. First, the invention embodiments control outward, lateral spraying and/or splashing of water that normally occurs when a moving vehicle passes through water located on a road surface and/or encounters water or vapor in the air. Relatedly, the intensity of vortices of liquid and air is reduced. As a result of this controlling of water and vortices of air and water, a safety hazard associated with the spraying or splashing of water on adjacent vehicles is substantially prevented. Secondly, the present invention, as compared to the common, imperforate flap, acts to reduce the drag of the moving vehicle as drag-causing vortices are also effectively controlled. Additionally, the present invention complies with proposed U.S. Department of Transportation regulations concerning spray and splash devices and, depending upon the location of the inventive embodiment, it is also expected to control the movement of mud and other like debris, unlike conventional mud flaps.

## Brief Description of the Drawings

Fig. 1 is a diagramatic representation of fluid flow patterns that are developed when a vehicle wheel contacts water on a road surface using a conventional imperforate mud flap;

Fig. 2 is a diagramatic representation of a pattern of vortices that is created about a moving truck;

Fig. 3 is a perspective view of the flap-like device of the present invention showing the device stripping moisture from vortices that contact the device;

Fig. 4 is an enlarged, fragmentary frontal view of the flap-like device showing the tapered holes;

Fig. 5 is an enlarged, lateral section, showing the tapered holes of the flap-like device;

Fig. 6 is an enlarged, lateral section showing the holes in a venturi-like configuration; and

Figs. 7A-7D show one or more imperforate members for use in creating areas of laterally inward flow and strong tip vortices.

## Detailed Description of the Preferred Embodiments

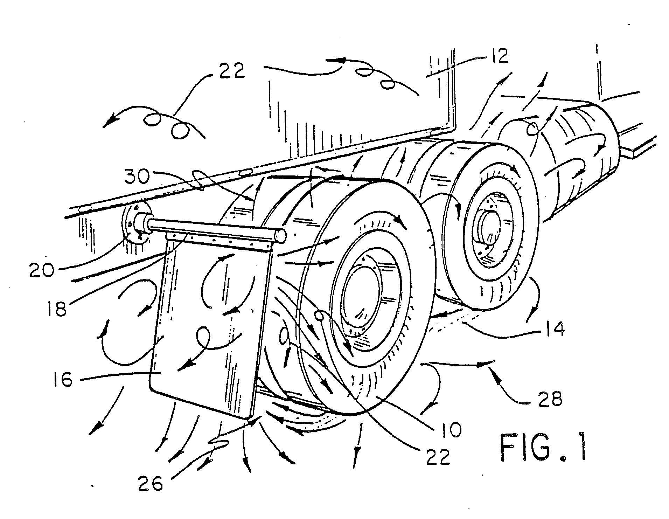

With reference to Fig. 1, the spraying and/or splashing problem to be solved by the embodiments of the present invention is illustrated. A wheel 10 of a vehicle 12, such as a truck and trailer tandem, is depicted as it moves over a road surface 14 that has a layer or patches of water and/or in which there is water in the air. The vehicle 12 includes a common, imperforate or prior art mud flap 16 extending downwardly from the underside of the trailer of the vehicle 12. The mud flap 16 is attached to the trailer by means of a support member 18 and a fastener 20. As is well known, the imperforate mud flap 16 is intended to prevent the passing of mud, sand, or other debris to the rear of the vehicle where it could subsequently strike a vehicle following the truck 12.

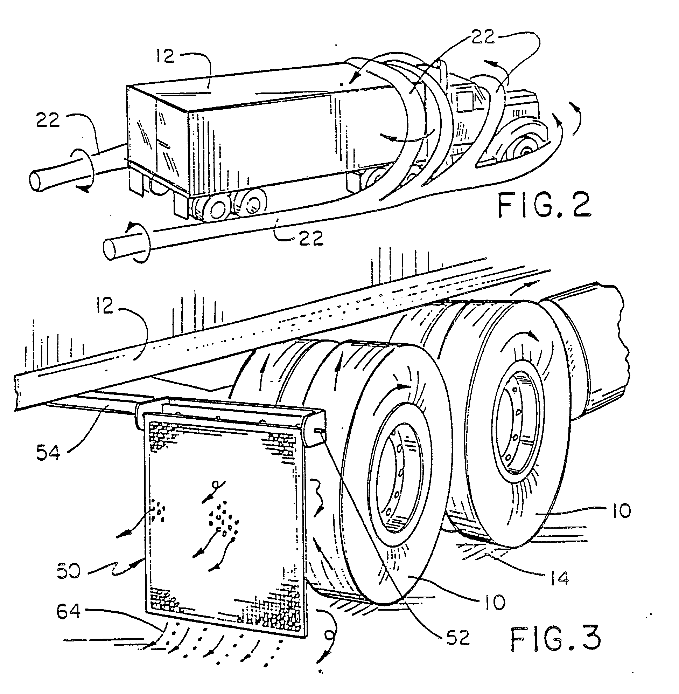

In the illustration of Fig. 1, as well as Fig 2, vortices 22 of air and water, including mist and spray, are generated about the vehicle 12. The vortical flow patterns 22 are created as a result of two major factors, namely the rotation of the wheel 10 and the "square-cornered" configuration of the vehicle 12. In the case of the vortices 22 shown in Fig. 2, which extend along the longitudinal sides of the vehicle 12, somewhat idealized flow patterns are illustrated. Because of the square corners associated with the vehicle 12, relatively strong vortices 22 are generated and tend to make the truck 12, in aerodynamic area, several times as large as it would otherwise be. Additionally, unlike the idealized patterns, there are typically hundreds of separate vortices that contribute to an overall complex flow pattern about the vehicle 12. Such vortices 22 are a significant cause of the spray and/or splash problem, as well as causing appreciable vehicle drag.

In connection with the development of vortices 22 of air and water, the water is obtained both from water present on the road surface 14 and water or vapor present in the air. As represented in Fig. 1, a number of water components are generated as the wheel 10 moves through the water and/or vapor. A rear wave of water 26 is produced by the rotating wheel 10 as it contacts water on the road surface causing water to be thrown in a direction rearward of the flap 16. A side wave of water 28 also results from such contact as the water is displaced in a laterally outward direction relative to the truck 12. As the wheel 10 rotates, it also carries water with it and tends to release the water near the top of the wheel revolution. The water released at the top of the wheel 10 is joined with moisture in the air to define a top wave of water 30 formed in a region above the wheel 10. Each of the water components, in combination with the chaotic or turbulent air flow patterns, create the hundreds of vortices 22 of air and water. A number of the vortices 22 act to carry water and moisture away from the vehicle 12. When other vehicles are in the path of such vortices 22, water is sprayed and/or splashed against the adjacent vehicle, which can cause the driver thereof to be temporarily blinded creating a dangerous driving situation including the possible loss of control of the vehicle. Also, such vortices 22 can generate considerable air turbulence in the path of the adjacent vehicle tending to cause buffeting of the adjacent vehicle.

Solutions to the foregoing spray and/or splash and vehicle drag problems are found in the embodiments of the present invention. Generally speaking, each of the embodiments is devised to improve the streamlining of fluid adjacent to the underside of the vehicle and/or the road surface. This streamlining results in desirable pressure recovery at the downstream or back side of the inventive embodiments such that relatively lower pressure areas are not formed behind the inventive embodiments.

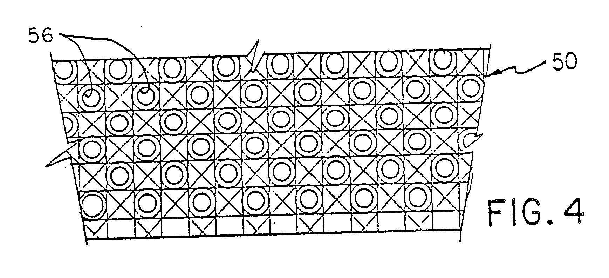

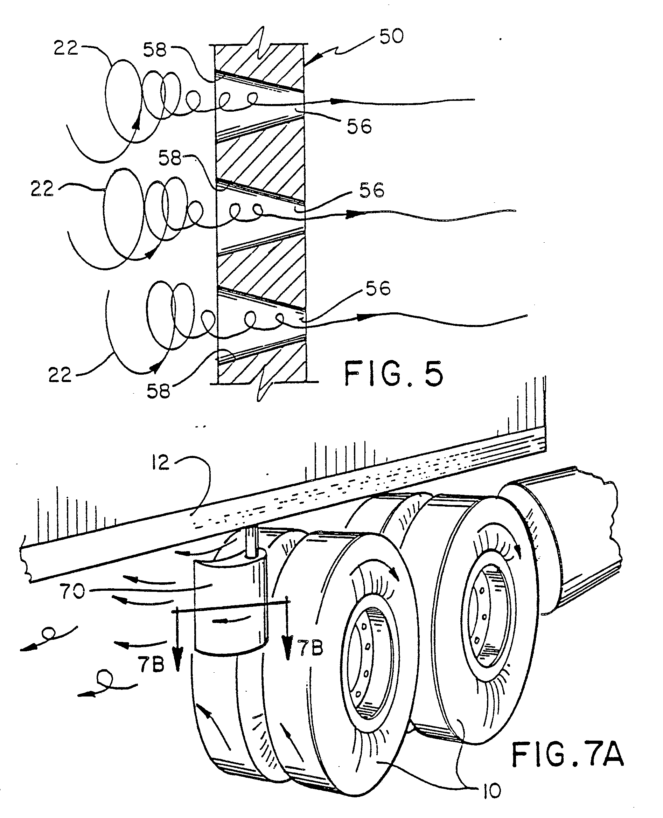

One of the preferred embodiments is depicted in Figs. 3-5. A flap-like device 50 is provided behind each set of vehicle wheels 10. In the depicted usage, the truck or vehicle 12 includes dual axle wheels. The flap-like device 50 is mounted at its top to a rod 52 which is received in holes of a support bar 54. The support bar 54 is attached beneath the frame of the trailer of the vehicle 12.

The flap-like device 50 includes a number of holes or perforations 56 spaced in a grid fashion throughout the rectangular configuration of the flap-like device 50. In one preferred configuration, each of the holes 56 is defined by tapered walls 58 formed on the side of the device 50 against which vortices 22 impinge. When vorticular patterns of water and/or air are present in the vicinity thereof, the holes 56 in the flap-like device 50 act to convert impinging large cell vortices to a number of smaller cell vortices as the flow moves through the holes 56. This process extracts most of the water, substantially eliminates the spattering and atomization of water that characterizes prior art flaps, and also substantially eliminates the presence of large cell vortices behind the flap, resulting in desired pressure recovery behind the flap. It has been observed that substantially all water 64 in the flow that contacts the device 50 departs from the bottom edge thereof, as illustrated in Fig. 3. Because of this removal of the water from the flow, essentially only air and very small droplets of water (mist) pass through the holes 56. While the air and mist are passing through the holes 56, the relatively large water droplets 64 travel downwardly along the device 50 and are released as a stream of water to the road surface 14 below the device 50. As a result, vortices that cause spray and splash are substantially prevented from moving laterally in an outward direction relative to the vehicle 12.

In addition to controlling spray and splash by controlling vortices 22 containing air and water, the flap-like device 50 also acts to reduce the drag of the vehicle 12. As previously discussed herein, vortices 22 are generated by the aerodynamically inefficient vehicle 12. Symmetrically disposed devices 50 cause the normally present chaotic flow patterns to be more streamlined and reduce the lateral extent of the vortices that can be created along the sides of the vehicle 12. The devices 50 also tend to create rolled-up stable vortices confined only to the lane of the highway in which the truck 12 is moving thereby noticeably reducing the drag of the vehicle 12. Specifically, because of the tapered holes 56, unwanted large vortices are controlled thereby producing improved streamlined flow and pressure recovery behind the device 50.

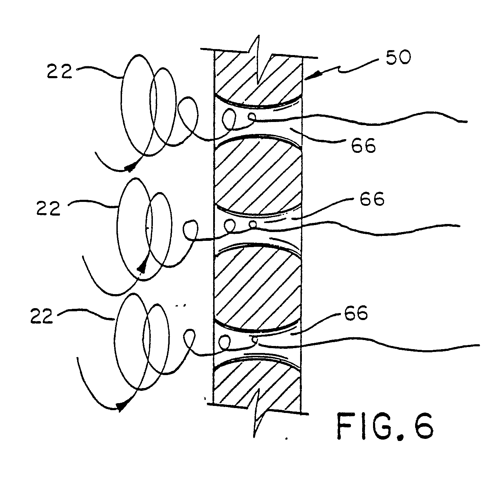

It should be appreciated that the drag reduction capability of the flap-like device is present even when there is no moisture or liquid. It should be understood too that the holes 56 can be of different configurations so long as they are not saturated with moisture and are able to pass the majority of the air flow impinging the flap-like device. By way of example, in another embodiment as illustrated in Fig. 6, the holes 66 in the flap-like device 50 have a venturi-like configuration in which a portion of each hole 66 is tapered at both the front and back sides of the device 50.

It should be understood that the exact geometry and placement of the flap-like devices need not be the same for different sized or configured vehicles. The size of the holes and their location can be predetermined based on the geometry of the vehicle to which the flap-like device is to be attached. Relatedly, the length and width of the flap-like device will also depend upon the specific configuration of the vehicle 12. It is believed that each flap-like device will be positioned between about a few to several inches from the rear of a vehicle wheel 10. In addition, the plane of the flap-like device may be perpendicular to the longitudinal extent of the vehicle 12 or it may be canted at an angle other than 90° so as to direct and entrain vortices beneath the vehicle 12.

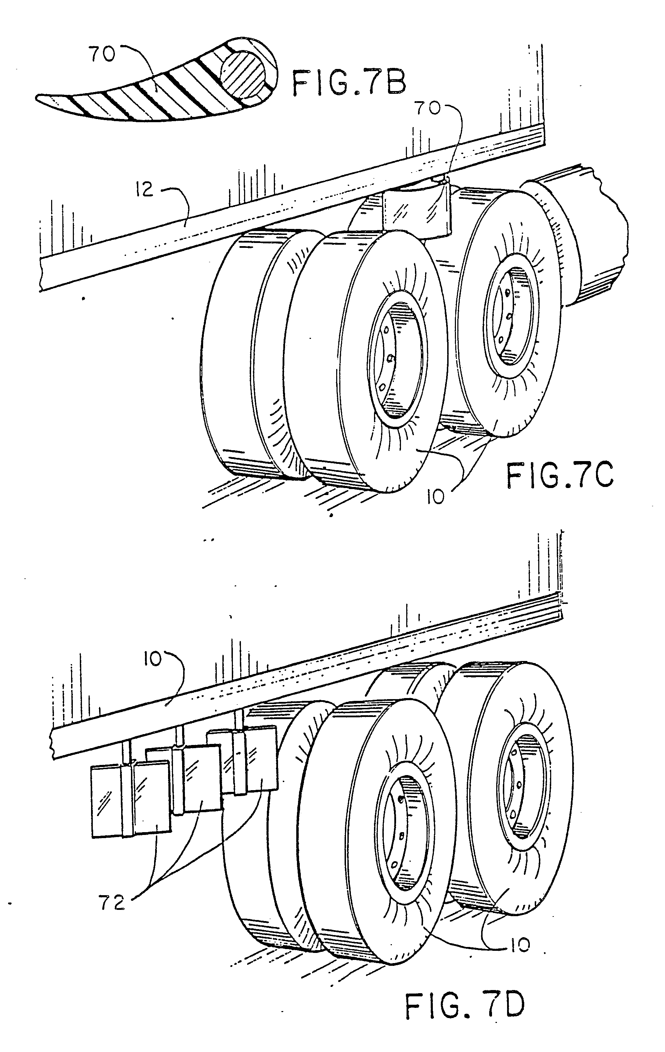

With reference to Figs. 7A-7D, another desired embodiment of the present invention is depicted. Unlike the embodiments of Figs. 3-6, an imperforate body is provided. With respect initially to Figs. 7A-7C, the imperforate body is a cambered device or airfoil member 70, which is connected beneath the frame of the vehicle 12, as illustrated in Fig. 7A. Preferably, the cambered device 70 has a low aspect ratio to provide a strong tip vortex with strength proportional to lift and downwash proportional to lift. In mounting the cambered device 70 to the vehicle 12, it is intended that the cambered device 70 be positioned so as to direct flow inwardly towards the vehicle 12. As with the flap-like device 50, the specific dimensions of the cambered device 70 will depend upon the geometric configuration of the vehicle to which it is attached. In connection with streamlining fluid flow, the device 70 entrains high energy streamlines of fluid and directs them into relatively lower energy layers of the boundary layers defined at the underside of the vehicle 12 and the road surface. This effectively gives the lower boundary layer region the kinetic energy needed to overcome the pressure gradient and remain attached, thereby reducing separation at the boundary layer(s) and reducing the extent of concomitant lateral wakes.

With reference to Fig. 7C, unlike the flap-like device 50, the cambered device 70 can be positioned between the two sets of wheels forming a dual axle arrangement typically found in a truck 12. As can be appreciated, in such a case, the vertical extent of the cambered device 70 is limited so as to not interfere with the rotation of the wheels 12.

With reference to Fig. 7D, another version of the imperforate body is illustrated. In this embodiment, instead of a cambered device, a relatively flat member 72 can be utilized. It should be understood, however, that the member 72 could also have an airfoil-like shape in cross-section. Unlike the cambered device 70 shown in Figs. 7A-7C, the member 72 is positioned at an angle relative to the longitudinal extent of the vehicle 12. This embodiment also illustrates that a number of imperforate bodies can be utilized for use in reducing spray and splash, as well as reducing vehicle drag. It should be appreciated that a number of cambered devices 70 could also be provided in series. The flat members 72 are positioned relative to the truck so as to direct the air and/or water containing vortices inward towards the truck. Consequently, spray and splash components are substantially prevented from being directed outwardly of the truck into adjacent vehicles in a multi-lane highway. As with the other embodiments, the flat imperforate member 72 can be of different dimensions, depending upon the geometric configuration of the vehicle 12. Similarly, the spacing between each of a plurality of flat members 72 depends primarily on the effectiveness of the preceeding member 72 in controlling the unwanted vortices that are generated.

It is also contemplated by the present invention that heating or pneumatic-related elements can be incorporated into the imperforate bodies. Such elements would be under the control of the driver of the vehicle 12. When ice begins to form on the bodies, the elements are activated to prevent continued ice formation so that the undesirable vorticular patterns continue to be controlled and any added weight due to the ice can be removed.

Based on the foregoing description, it is readily discerned that the present invention provides a number of worthwhile benefits. Each embodiment creates improved streamlining and enhances pressure recovery behind the device to thereby control the movement of chaotic fluid flow patterns. In controlling such patterns, spraying and splashing are substantially prevented when water is present and the rotating wheels of the vehicle contact the water. An additional valuable benefit is the drag reduction that results from the use of the embodiments of the present invention. With regard to the imperforate bodies, ice buildup on the outer surfaces thereof is prevented by the use of heating or pneumatic elements which can be controlled by the vehicle driver.

Although the present invention has been described with reference to a plurality of embodiments, it should be appreciated that further variations can be effected within the spirit and scope of this invention.

## Claims

1. A method for controlling spray and/or splash caused by a vehicle contacting water and/or for reducing the drag of the vehicle, comprising: providing fluid flow control means; connecting said fluid flow control means adjacent to a wheel of the vehicle;

providing a vortex of fluid;

permitting said fluid flow control means to be contacted by the vortex of fluid; and

using said fluid flow control means to streamline the flow of fluid and/or reduce the drag of the vehicle.

2. A method, as claimed in Claim 1, wherein: the fluid includes a liquid and said using step includes preventing substantially all of the liquid from passing in a direction substantially laterally outward relative to the vehicle.

3. A method, as claimed in Claim 1, wherein: said using step includes using said fluid flow control means to enhance pressure recovery on a side of said fluid control means opposite that side contacted by the vortex of fluid

4. A method, as claimed in Claim 1, wherein: the fluid includes a liquid and said using step includes directing the liquid in a generally downward direction along a surface of said fluid flow control means.

5. A method, as claimed in Claim 1, wherein: said fluid flow control means includes a flap-like device having a number of holes.

6. A method, as claimed in Claim 5, wherein: said providing of said fluid flow control means includes determining the preferred arrangement of said holes based upon the configuration of the vehicle.

7. A method, as claimed in Claim 5, wherein: one or more of said holes is tapered.

8. A method, as claimed in Claim 5, wherein: one or more of said holes is venturi-shaped.

9. A method, as claimed in Claim 5, wherein: said fluid flow control means includes an imperforate member connected to the vehicle adjacent to a vehicle wheel.

10. A method, as claimed in Claim 9, wherein: said connecting step includes inclining said member at an angle relative to the longitudinal extent of the vehicle.

11. A method, as claimed in Claim 9, wherein: said connecting step includes locating said member between and above the axles of a dual-axle wheel arrangement.

12. An apparatus for controlling spray and/or splash caused by a vehicle contacting water and/or for reducing the drag of the vehicle, comprising: fluid flow control means having a first side against which a vortex of fluid impinges, and a second side and being positioned adjacent to a vehicle wheel and including means for streamlining fluid flow to enhance pressure recovery on said second side of said fluid flow control mean; and means for connecting said fluid flow control means to the vehicle.

13. An apparatus, as claimed in Claim 12, wherein: said fluid flow control means includes a flap-like device having a number of holes.

14. An apparatus, as claimed in Claim 13, wherein: one or more of said holes is tapered.

15. An apparatus, as claimed in Claim 13, wherein: one or more of said holes is venturi-shaped.

16. An apparatus, as claimed in Claim 13, wherein: each of said holes is located in a predetermined position based on the geometric configuration of the vehicle to which said fluid flow control means is connected.

17. An apparatus, as claimed in Claim 12, wherein: said fluid flow control means includes an imperforate member connected to the vehicle adjacent to the vehicle wheel.

18. An apparatus, as claimed in Claim 17, wherein: said imperforate member is a cambered device.

19. An apparatus, as claimed in Claim 17, wherein: said imperforate member is positioned at an angle relative to the longitudinal axis of the vehicle.

FIG.1

12

22

22

22

FIG.2

12

54

50

64

10

10

14

52

FIG.3

FIG. 4

FIG. 5

FIG. 7A

FIG. 6

70

FIG.7B

70

12

FIG.7C

10

10

72

10

FIG.7D

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | BE-A- 655 837 (KUMFICAR) <br> * Claims 1-4 * <br> --- | 1-5,7, 12-14 | B 62 D 25/18 |
| X | US-A-3 582 108 (CARLTON) <br> * Claim 1 * <br> --- | 1-5,12, 13 | |
| X | US-A-2 619 363 (WENHAM) <br> * Column 2, lines 25-33; figure 3 * <br> --- | 1-6,12, 13 | |
| X | US-A-4 585 242 (SPARKS) <br> * Figure 1; abstract * <br> --- | 1-4,9- 11,12, 17,19 | |
| X | DE-A-2 045 212 (MOSS) <br> * Figure 1; page 4, last paragraph * <br> ----- | 1-4,9, 12,17- 19 | |

TECHNICAL FIELDS SEARCHED (Int. Cl.4)

B 62 D

The present search report has been drawn up for all claims

| Place of search | Date of completion of the search | Examiner |
|---|---|---|
| THE HAGUE | 02-06-1988 | SCHMITTER J.M. |

EPO FORM 1503 03.82 (P0401)